# EUROPÄISCHE PATENTANMELDUNG

(11) **EP 0 718 506 A1**
(43) Veröffentlichungstag der Anmeldung: **26.06.1996**
(21) Anmeldenummer: 95116465.6
(22) Anmeldetag: 19.10.1995
(51) Int. Cl.: F16B 13/00, F16B 19/12, E21D 21/00

(54) **Durch eine Sprengladung verankerbarer Ankerbolzen**

(30) Priorität: 20.12.1994 DE 4445422
(71) Anmelder: fischerwerke Artur Fischer GmbH & Co. KG, D-72178 Waldachtal (DE)
(72) Erfinder: Hein, Bernd, Dipl. Ing., D-72250 Freudenstadt (DE); Weber, Wilfried, Dipl. Ing., D-72296 Schopfloch (DE); Prümmer, Rolf, Prof. Dr.-Ing. habil, D-79194 Gundelfingen (DE); Mehlin, Hans Peter, Dipl.-Phys., D-79589 Binzen (DE)

(57) **Zusammenfassung**

Es wird ein durch eine Sprengladung (8) in einer Sacklochbohrung (17) eines Vollmaterials (18), insbesondere einer Felswand oder Beton zu verankernder Ankerbolzen mit einem die Sprengladung aufweisenden Verformungsraum (4) vorgeschlagen. Um eine kostengünstige Herstellung des Ankerbolzens , eine einfache Montage und hohe Auszugskräfte des zu verankernden Ankerbolzens (1) zu erreichen, ist der zur vorderen Stirnseite des Ankerbolzens (1) offene Verformungsraum (4) durch einen Stopfen (5) verschlossen. In dem Stopfen (5) ist ein die vordere Stirnseite des Ankerbolzens (1) überragender Schlagbolzen (15) eingesetzt und geführt, so daß der Schlagbolzen (15) beim Aufschlagen auf die hintere Stirnseite (2) des Ankerbolzens (1) auf eine zwischen dem Stopfen (5) und der Sprengladung (8) angeordnete Zündkapsel (13) auftrifft.

## Beschreibung

Die Erfindung betrifft einen durch eine Sprengladung in einer Sacklochbohrung eines Vollmaterials, insbesondere einer Felswand oder Beton zu verankernden Ankerbolzen mit einem die Sprengladung aufweisenden Verformungsraum.

Aus der DE-OS 36 13 624 ist ein durch eine Sprengladung in einer Sacklochbohrung zu verankernder Ankerbolzen bekannt, dessen Verformungsraum vollständig mit einer Sprengkapsel ausgefüllt ist. Die Zündung der Sprengkapsel erfolgt über ein Auslösewerkzeug, das durch eine Innenbohrung des Ankerbolzens an der Stirnwand der Sprengkapsel angesetzt wird. Aufgrund dieses Auslösemechanismus können nur hülsenförmige Ankerbolzen verankert werden. Desweiteren ist zum Aufbau des Explosionsdrucks zwecks Verformung und Ausbeulung der Mantelfläche des Ankerbolzens eine zusätzliche, den Explosionsdruck aufnehmende Verkapselung der Sprengladung erforderlich. Da über die Ausbeulung der Kapsel der Verformungsraum des Ankerbolzens aufgeweitet wird, bestimmt die Menge des Sprengstoffes und die Größe der Kapsel die Größe des Verformungsraumes. Diese Abhängigkeit führt dazu, daß eine relativ große mit Sprengstoff gefüllte Sprengkapsel zur vollständigen Ausfüllung des Verformungsraumes erforderlich ist. Damit wird jedoch das Gefährdungs- und Risikopotential erhöht.

Ein in einer Felswand mittels einer Sprengladung verankerbarer Ankerbolzen ist auch aus der US-PS 2 573 880 bekannt. Bei dieser Lösung wird ein innerhalb des Bolzens befindlicher Stößel mittels einer Explosivladung zum vorderen Ende des Bolzens getrieben, wodurch eine Aufweitung und damit Befestigung des Bolzens erfolgt. Die Zündung der Ladung erfolgt mit einem Elektrozünder, welcher im direkten Kontakt mit der Sprengladung steht. Die Zündleitung wird an der Außenseite des Bolzens nach außen geführt. Damit können Beschädigungen der Zündleitung oder gar ein Abreißen während des Setzens des Ankerbolzens eintreten.

Der Erfindung liegt die Aufgabe zugrunde, einen durch eine Sprengladung in einer Sacklochbohrung eines Vollmaterials zu verankernden Ankerbolzen zu schaffen, der kostengünstig herstellbar und in einfacher und sicherer Weise montierbar ist und hohe Haltewerte aufweist.

Die Lösung dieser Aufgabe wird durch die im Anspruch 1 angegebenen Merkmale erreicht.

Der Verformungsraum des Ankerbolzens dient zur Aufnahme der Sprengladung. Durch den Verschluß der offenen Stirnseite des Verformungsraumes mit einem Stopfen kann sich nach Zündung der Sprengladung der Explosionsdruck aufbauen, um die den Verformungsraum begrenzende Wandung des Ankerbolzens auszubeulen. Diese Ausbeulung drückt sich in die Bohrlochwandung des Verankerungsgrundes ein, so daß sich eine auf Formschluß beruhende Verankerung des Ankerbolzens im Ankergrund ergibt.

Die Zündung der Sprengladung erfolgt über einen Schlagbolzen, der in einer zentrischen Bohrung des Stopfens in der Weise eingesetzt ist, daß er die vordere Stirnseite des Ankerbolzens überragt. Das Einsetzen des Schlagbolzens erfolgt zweckmäßigerweise erst kurz vor dem Einführen des Ankerbolzens in die Sacklochbohrung des Ankergrundes. Nach dem Aufsitzen des Schlagbolzens am Bohrlochgrund wird durch einen Hammerschlag auf die hintere Stirnseite des Ankerbolzens durch Auftreffen des Schlagbolzens auf die Zündkapsel die Zündung der Sprengladung ausgelöst. Der Explosionsdruck baut sich im gesamten Verformungsraum auf und bewirkt die Ausbeulung zur Verankerung des Ankerbolzens. Da der Verformungsraum durch den Stopfen verschlossen ist und gleichzeitig auch als Aufnahmeraum für den Sprengstoff dient, ist eine zusätzliche Sprengkapsel nicht erforderlich. Desweiteren kann der Verformungsraum individuell in Anpassung an den jeweiligen Ankergrund oder der Gestaltung des Ankerbolzens und unabhängig von der Füllmenge des Sprengstoffes variiert werden.

In einer weiteren Ausgestaltung der Erfindung kann der Schlagbolzen eine Einschlagsperre aufweisen und in einer zentrischen Bohrung des Stopfens eingesetzt sein. Damit ist es möglich, den Schlagbolzen bereits herstellerseitig einzusetzen. Die Einschlagsperre ist so gestaltet, daß diese nur durch einen kräftigen Hammerschlag bei der Montage des Ankerbolzens überwunden werden kann.

Zur axialen, den Explosionsdruck aufnehmenden Fixierung des Stopfens im vorderen Bereich des Verformungsraumes ist es zweckmäßig, den Stopfen mit einem Außengewinde zu versehen und in ein entsprechendes Innengewinde des Verformungsraumes einzudrehen.

Die Montage der Zündkapsel in den Ankerbolzen wird dadurch erleichtert, daß diese in der Unterseite einer einen Durchbruch aufweisenden Scheibe eingesetzt ist, die zwischen dem Stopfen und der Sprengladung im Verformungsraum angeordnet ist.

Für die Sprengladung hat es sich als vorteilhaft erwiesen, einen Sprengstoff mit einer Detonationsgeschwindigkeit größer als 3500 m/sek. zu verwenden. Besonders geeignet ist eine Mischung der Sprengstoffe PETN und RDX, wobei der Anteil von PETN mehr als 10% betragen sollte.

In einer weiteren Ausgestaltung der Erfindung kann auf die vordere Stirnseite des Ankerbolzens eine topfförmige, das überstehende Ende des Schlagbolzens abdeckende Kappe aufgesetzt sein. Mit dieser Kappe wird ebenfalls eine Sicherung gegen ungewolltes Auslösen der Zündung erreicht. Vor dem Einführen in das Bohrloch wird die Kappe abgenommen. Die Kappe kann jedoch auch mit einer Stauchzone ausgestattet sein, so daß eine Abnahme nicht erforderlich ist. Durch Aufsitzen auf dem Bohrlochgrund wird beim Aufschlagen auf den Ankerbolzen die Kappe gestaucht und dabei der Schlagbolzen zur Zündung der Zündkapsel axial verschoben.

Für kleinere Bolzendurchmesser ist es zweckmäßig, den Verformungsraum als zentrische Bohrung auszubilden, dessen Durchmesser so gewählt ist, daß die Dicke der den Verformungsraum begrenzenden Wandung etwa 10-20% des Außendurchmessers des Ankerbolzen beträgt. Die zentrische Bohrung kann in zwei oder mehrere Abschnitte unterteilt sein, deren Durchmesser in Richtung zum hinteren Ende des Ankerbolzens kleiner wird. Dadurch wird in Richtung Bohrlochtiefe eine zunehmende Ausbeulung des Ankerbolzens erreicht.

Bei Ankerbolzen mit größeren Durchmessern ist es zweckmäßig, den Verformungsraum als konzentrisch um die Mittelachse angeordnete Ringbohrung auszubilden. Damit kann das Volumen des Verformungsraumes und damit auch die Menge des Sprengstoffes für die Ausbeulung der Wandung begrenzt werden.

Zur Entlüftung des Verformungsraumes nach der Explosion und zum allmählichen Abbau des Explosionsdruckes kann der Ankerbolzen eine vom Verformungsraum ausgehende, nach außen geführte Entlüftungsöffnung aufweisen.

Schließlich ist es zweckmäßig, zur Verbesserung der Haltewerte die Mantelfläche des Ankerbolzens im Bereich des Verformungsraumes mit einer Aufrauhung, Riffelung oder dgl. zu versehen.

Im Folgenden werden unter Bezugnahme auf die Zeichnungen Ausführungsbeispiele der Erfindung näher erläutert.

Es zeigen:
- Figur 1: den in einem Ankergrund eingesetzten Ankerbolzen im Längsschnitt,
- Figur 2: den Ankerbolzen nach Figur 1 mit einer Kappe zur Sicherung des Schlagbolzens,
- Figur 3: eine weitere Ausführungsform des Ankerbolzens.

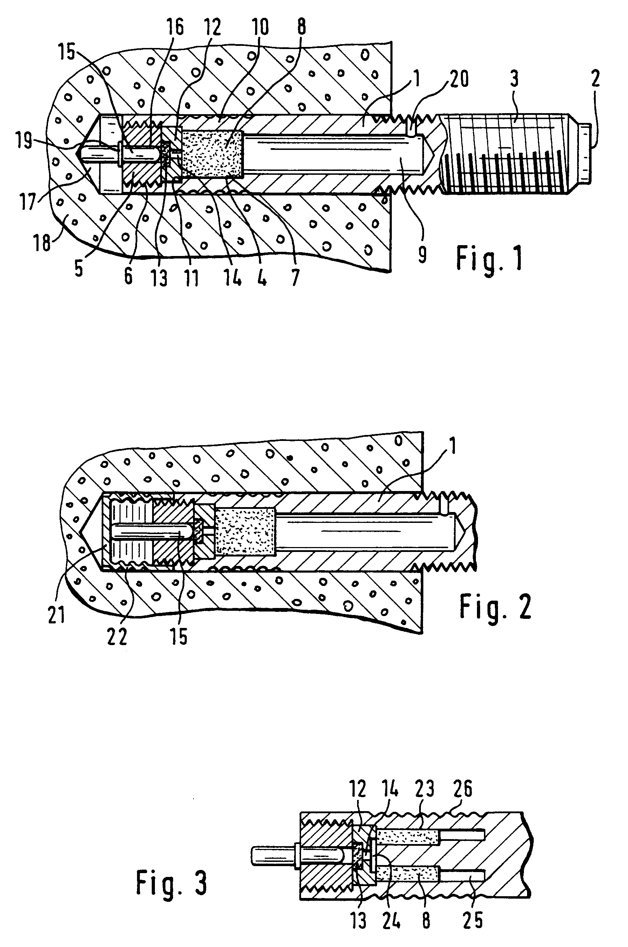

Der in Figur 1 dargestellte Ankerbolzen 1 weist an seinem hinteren Ende 2 ein Außengewinde 3 zur Befestigung eines Gegenstandes auf. Der vordere Bereich des Ankerbolzens ist mit einem Verformungsraum 4 versehen, der als zentrische Bohrung ausgebildet und in mehrere Abschnitte unterteilt ist. Der nach vorne offene Verformungsraum 4 ist durch einen Stopfen 5 verschlossen. Zur Halterung und axialen Fixierung des Stopfens 5 ist dieser über ein Gewinde 6 im vorderen Bereich des Verformungsraumes 4 festgesetzt. An den Gewindeabschnitt schließt sich ein erster Abschnitt 7 des Verformungsraumes 4 mit einem gegenüber dem Gewindeabschnitt reduzierten Durchmesser an. In diesem Abschnitt 7 befindet sich die Sprengladung 8, die in Anpassung an diesen Abschnitt zylinderförmig verpreßt ist. An diesen Abschnitt 7 schließt sich ein weiterer im Durchmesser reduzierter Abschnitt 9 an, dessen Volumen zur Minderung des Explosionsdruckes dient. In den beiden Abschnitten 7 und 9 baut sich der Explosionsdruck auf, der zur Verformung und Ausbeulung der die Abschnitte begrenzenden Wandung 10 führt.

Zwischen dem Stopfen 5 und der durch den Abschnitt 7 gebildeten Schulter 11 ist eine vorzugsweise aus Metall bestehende Scheibe 12 eingeklemmt, in deren Unterseite die Zündkapsel 13 eingebettet ist. Zwischen der Zündkapsel 13 und der Sprengladung 8 besteht über den Durchbruch 14 eine Verbindung, so daß über den durch die Zündkapsel ausgelösten Zündstrahl die Initiierung der Sprengladung ermöglicht wird.

Die Zündung der Zündkapsel 13 erfolgt durch Schlagwirkung, die von dem Schlagbolzen 15 ausgeübt wird. Der Schlagbolzen 15 ist in einer zentrischen Bohrung 16 des Stopfens 5 in der Weise eingesetzt, daß ein Teilstück seiner Länge die vordere Stirnseite des Ankerbolzens 1 überragt. Der Ankerbolzen 1 wird in das Sackloch 17 des Ankergrundes 18 soweit eingeschoben, bis der Schlagbolzen 15 am Bohrlochgrund aufsitzt. Zur Verankerung des Ankerbolzens 1 wird mit einem Hammerschlag auf die Stirnseite 2 des Ankerbolzens 1 dieser in das Bohrloch 17 eingetrieben, so daß der sich am Bohrlochgrund abstützende Schlagbolzen 15 auf die Zündkapsel 13 auftrifft und damit die Zündung der Sprengladung 8 auslöst. Um ein unbeabsichtigtes Auslösen der Zündung zu verhindern, ist an dem Schlagbolzen 15 eine durch Schlag überwindbare Einschlagsperre 19 angeordnet. Zur Entlüftung des Verformungsraumes 4 nach der Verankerung ist eine seitlich angebrachte Entlüftungsöffnung 20 vorgesehen, die außerhalb des Bohrloches 17 nach außen geführt ist.

Im Ausführungsbeispiel nach Figur 2 ist das vorstehende Ende des Schlagbolzens 15 zur Sicherung gegen unbeabsichtigtes Auslösen der Zündung durch eine napfförmige Kappe 21 abgedeckt. Die Kappe 21 ist auf der Stirnseite des Ankerbolzens 1 aufgesteckt und kann durch Klemmung, Rastnasen oder dgl. gehalten werden. Im dargestellten Ausführungsbeispiel ist die Kappe mit einer Stauchzone 22 versehen, die beim Aufschlagen des Ankerbolzens 1 auf den Ankergrund durch Stauchung die axiale Verschiebung des Schlagbolzens 15 und das Auslösen der Zündung ermöglicht.
In diesem Fall kann auf eine Einschlagsperre beim Schlagbolzen 15 verzichtet werden.

Bei dem Ausführungsbeispiel nach Figur 3 ist der Verformungsraum des Ankerbolzens 1 als konzentrisch um die Mittelachse angeordnete Ringbohrung 23 ausgebildet. Um eine Verbindung zwischen der Zündkapsel 13 und der Sprengladung 8 zu schaffen, ist in die Oberseite der Scheibe 12 eine Ausnehmung 24 eingebracht, die die Verbindung zwischen der zentrischen Bohrung 14 und der Sprengladung 8 herstellt. Auch bei dieser Ausführungsform des Verformungsraumes kann die Ringbohrung 23 mit einem engeren Abschnitt 25 verlängert sein. Zur Erhöhung des Haltewertes kann die Mantelfläche des Ankerbolzens 1 im Bereich des Verformungsraumes mit einer Riffelung 26 versehen sein.

## Patentansprüche

1. Durch eine Sprengladung in einer Sacklochbohrung eines Vollmaterials, insbesondere einer Felswand oder Beton zu verankernder Ankerbolzen mit einem die Sprengladung aufweisenden Verformungsraum, **dadurch gekennzeichnet,** daß der zur vorderen Stirnseite des Ankerbolzens (1) offene Verformungsraum (4) durch einen Stopfen (5) verschlossen ist, daß in dem Stopfen (5) ein die vordere Stirnseite des Ankerbolzens überragender Schlagbolzen (15) eingesetzt und geführt ist, und daß der Schlagbolzen (15) beim Aufschlagen auf die hintere Stirnseite (2) des Ankerbolzens (1) auf eine zwischen dem Stopfen (5) und der Sprengladung (8) angeordnete Zündkapsel (13) auftrifft.

2. Ankerbolzen nach Anspruch 1, **dadurch gekennzeichnet,** daß der Schlagbolzen (15) eine Einschlagsperre (19) aufweist und in einer zentrischen Bohrung (16) des Stopfens (5) eingesetzt ist..

3. Ankerbolzen nach Anspruch 1, **dadurch gekennzeichnet,** daß der Stopfen (5) über ein Gewinde (6) im vorderen Bereich des Verformungsraumes (4) axial fixiert ist.

4. Ankerbolzen nach Anspruch 1, **dadurch gekennzeichnet,** daß die Zündkapsel (13) in der Unterseite einer einen Durchbruch (14) aufweisenden Scheibe (12) eingesetzt ist, die zwischen dem Stopfen (5) und der Sprengladung (8) im Verformungsraum (4) angeordnet ist.

5. Ankerbolzen nach Anspruch 1, **dadurch gekennzeichnet,** daß die Sprengladung (8) aus einem Sprengstoff mit einer Detonationsgeschwindigkeit größer als 3500 m/Sek. besteht.

6. Ankerbolzen nach Anspruch 5, **dadurch gekennzeichnet,** daß die Sprengladung aus einer Mischung der Sprengstoffe PETN und RDX besteht, wobei der Anteil des Sprengstoffes PETN mindestens 10% beträgt.

7. Ankerbolzen nach Anspruch 1, **dadurch gekennzeichnet,** daß auf die vordere Stirnseite des Ankerbolzens (1) eine topfförmige, das überstehende Ende des Schlagbolzens (15) abdeckende Kappe (21) aufgesetzt ist.

8. Ankerbolzen nach Anspruch 7, **dadurch gekennzeichnet,** daß die Kappe (21) eine Stauchzone (22) aufweist.

9. Ankerbolzen nach Anspruch 1, **dadurch gekennzeichnet**, daß der Verformungsraum (4) als zentrische Bohrung ausgebildet ist.

10. Ankerbolzen nach Anspruch 9, **dadurch gekennzeichnet,** daß die zentrische Bohrung einen ersten Abschnitt (7) aufweist, an den sich wenigstens ein weiterer Abschnitt (9) mit einem kleineren Durchmesser anschließt.

11. Ankerbolzen nach Anspruch 1, **dadurch gekennzeichnet,** daß der Verformungsraum (4) als konzentrisch um die Mittelachse angeordnete Ringbohrung (23) ausgebildet ist.

12. Ankerbolzen nach Anspruch 1, **dadurch gekennzeichnet,** daß der Ankerbolzen (1) eine vom Verformungsraum (4) ausgehende, nach außen geführte Entlüftungsöffnung (20) aufweist.

13. Ankerbolzen nach Anspruch 1, **dadurch gekennzeichnet,** daß die Mantelfläche des Ankerbolzens (1) im Bereich des Verformungsraumes (4) eine Aufrauhung, Riffelung 26 oder dgl. aufweist.
